# EUROPEAN PATENT APPLICATION

(11) **EP 4 830 578 A1**
(43) Date of publication of application: **28.10.2026**
(21) Application number: 25214971.1
(22) Date of filing: 11.11.2025
(51) Int. Cl.: A45F 3/04, A44B 11/02, A45C 13/10, A44B 11/10, A44B 11/25, F16G 11/10

(54) **CORD FASTENING AND ADJUSTING DEVICE**

(30) Priority: 22.04.2025 KR 20250051992
(71) Applicant: WOOJIN PLASTIC Co., Ltd., Namyangju-si, Gyeonggi-do 12017 (KR)
(72) Inventor: Paik, Ji Sook, 04427 Seoul (KR); Paik, Nan Hee, 06288 Seoul (KR); Paik, Ji Hye, 06002 Seoul (KR); Son, Ji Won, 04427 Seoul (KR)
(74) Representative: RGTH

(57) **Abstract**

The present invention relates to a cord fastening and adjusting device. The device includes a fixing member having a first hook portion extending forward from a first base and configured to engage a first cord of an object, and a first connecting portion including a knot receiving portion extending rearward from the first base to which one end of a connecting cord is fixed. The device further includes an adjusting member having a second hook portion extending forward from a second base and configured to engage a second cord of the object, and a second connecting portion through which the connecting cord passes and which selectively fixes or releases the connecting cord.

## Description

### Field of the Invention

The present invention relates to a cord fastening and adjusting device that allows a cord to be easily hooked and fastened, and enables adjustment and secure fixation of spacing.

### Description of the Related Art

Various bags, such as hiking backpacks, generally employ buckles as means for fastening, fixing, or connecting belts or straps. A buckle is a fastener in which two members are coupled to each other to achieve fixation, and it is typically made of synthetic resin as an integrally molded structure that allows elastic engagement. Due to its light weight and ease of fastening, it is widely used.

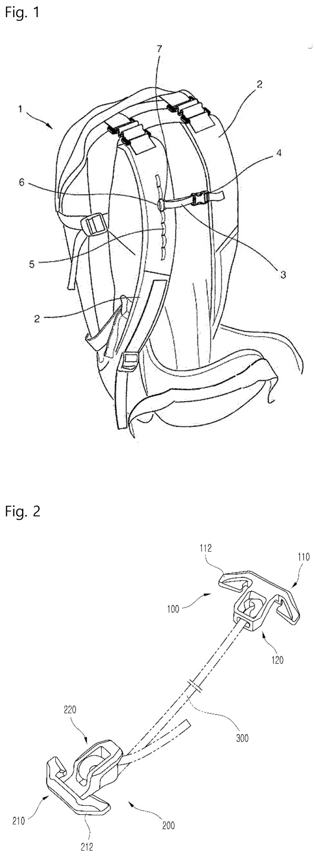

FIG. 1 illustrates an example of a conventional buckle installed on a belt or strap of a backpack. As shown in FIG. 1, in addition to a buckle 4 connected and fastened with a belt 3, a belt hanger 6 may be used to hook one end of the belt 3 to a loop belt 5 provided at a certain portion of a backpack 1.

The belt 3 serves as a chest belt that stably fixes the chest portion when the backpack 1 is worn. One end of the belt 3 is fixed to one shoulder strap 2 of the backpack 1 as a fixed end, and the other end, being a free end, is provided with the belt hanger 6 for hooking to the loop belt 5 installed on the other shoulder strap 2. A buckle 4 for fastening or releasing the belt 3 is provided in the middle portion of the belt 3.

The belt hanger 6 has a hook hole 7 formed at one end for engaging the belt, and a belt hooking portion protruding on both sides at the other end, forming a simple structure.

Therefore, the user wears the backpack 1 by hanging the shoulder straps 2 on both shoulders and then hooks the belt hanger 6 to a loop of the loop belt 5 disposed at a location suitable for the user's body, thereby connecting the belt 3 to both shoulder straps 2. The user then adjusts and tightens the belt 3 by manipulating the portion connected to the buckle 4.

However, the operation of inserting and removing the belt hanger 6 into and from the loop belt 5 is very inconvenient, and since the belt 3 is merely hooked and not structurally adjustable, users typically keep the belt hanger 6 hooked to the loop belt 5 and use the buckle 4 for tightening, fastening, or releasing the belt 3.

To fasten and manipulate a single belt, both the belt hanger 6 and a buckle 4 of complicated structure are required, which increases production costs and results in an inferior external appearance due to the complex configuration.

Furthermore, the belt hanger 6 must be selectively inserted into a loop belt 5 at a position suitable for the user's body shape, which is not only cumbersome to operate but also requires dual manipulation of both the belt hanger 6 and the buckle 4, thereby causing inconvenience.

Recently, instead of using a wide belt as described above, backpacks or vests employing narrower straps or cords having a circular cross-section have been proposed to achieve a simpler appearance and improved connection and pulling performance. However, when such cords are used, no proper mechanism exists for adjusting the cord tension, making practical application difficult.

Accordingly, there is a need for a cord fastening and adjusting device capable of providing tension adjustment for a cord while also solving the problems associated with conventional belt hangers.

### [Prior Art Document]

### [Patent Document]

1. Korean Registered Patent No. 10-0501498

### SUMMARY OF THE INVENTION

The present invention is intended to provide a cord fastening and adjusting device that allows a cord to be fastened, adjusted in tension, and securely fixed.

The present invention further aims to provide a cord fastening and adjusting device in which the functions of a buckle and a belt hanger are integrated, thereby simplifying the overall structure, reducing manufacturing costs, and improving the external appearance.

The present invention also seeks to provide a cord fastening and adjusting device that allows fastening, tension adjustment, and fixing of the cord to be performed more easily and conveniently.

The problems to be solved by the present invention are not limited to the above descriptions.

As a technical means for achieving the above-described objectives, a cord fastening and adjusting device according to an embodiment of the present invention includes a fixing member and an adjusting member connected by a connecting cord.

The fixing member includes a first base, a first hook portion extending forward from the first base and configured to be engaged with a first cord of an object, and a first connecting portion including a knot receiving portion extending rearward from the first base, in which one end of the connecting cord is fixed.

The adjusting member includes a second base, a second hook portion extending forward from the second base and configured to be engaged with a second cord of the object, and a second connecting portion through which the connecting cord passes and which selectively fixes or releases the connecting cord.

The knot receiving portion may have one open surface and a through-hole formed at a rear side thereof, such that a knot formed at the fixed end of the connecting cord is seated therein.

The first hook portion may include a first entrance portion narrowing toward the front of the first base, a pair of first wing portions extending laterally from the first base, and a pair of first hook grooves formed between the first base and the first wing portions in which the first cord is engaged.

The second hook portion may include a second entrance portion narrowing toward the front of the second base, a pair of second wing portions extending laterally from the second base, and a pair of second hook grooves formed between the second base and the second wing portions in which the second cord is engaged.

Undersurfaces of the first and second wing portions may include inclined surfaces slanting upwardly toward the inside.

Entrances of the first and second hook grooves may be narrowed by hook parts bent inwardly so as to prevent disengagement of the cords.

Each hook part may be formed by bending inward the inner ends of the wing portions that extend rearward.

The second connecting portion may include a passage through which the connecting cord is inserted, a pressing groove in communication with the passage and configured to press the connecting cord, and a hooking bar extending across the passage, such that the connecting cord is fixed or released through cooperation between the hooking bar and the pressing groove.

The hooking bar may be disposed above the second base, and the pressing groove may be disposed below the hooking bar.

The pressing groove may be narrower than the passage and have a V-shape configuration that narrows downward.

A protrusion may be formed at an outer rear end of the second connecting portion to release a fixed state of the connecting cord.

The fixing member may further include a first seating groove on an upper surface thereof so that the first cord is stably seated therein, and the adjusting member may include a second seating groove on an upper surface thereof so that the second cord is stably seated therein.

The connecting cord may have a knot formed at the fixed end and seated within the knot receiving portion, and a free end configured to allow adjustment of its tension through the second connecting portion.

According to the present invention, since the cord connecting portion and the hook portion are provided together, the cord can be fastened or fixed without the need for a separate buckle, and it can be operated simply, thereby allowing convenient use.

According to the means for solving the above problems, the functions of a buckle and a belt are integrated, enabling reduction in manufacturing cost and formation of a simpler and more refined appearance when applied to backpacks or clothing.

The effects obtainable from the present invention are not limited to those described above, and other effects not specifically mentioned herein will be clearly understood by those skilled in the art from the following description of the invention.

### BRIEF DESCRIPTION OF THE DRAWINGS

FIG. 1 is a perspective view of a backpack showing an example of a conventional belt hanger.
FIG. 2 is a perspective view illustrating a connection state between a fixing member and an adjusting member of a cord fastening and adjusting device according to an embodiment of the present invention.
FIGS. 3A and 3B are perspective views of the fixing member shown in FIG. 2.
FIGS. 4A and 4B are a plan view and a front view of the fixing member shown in FIG. 2.
FIGS. 5A and 5B are sectional views taken along lines A-A and B-B of FIG. 4, respectively.
FIGS. 6A, 6B, and 6C are views showing a state in which a connecting cord and a first cord are connected to the fixing member of FIG. 2.
FIGS. 7A and 7B are perspective views of the adjusting member shown in FIG. 2.
FIGS. 8A and 8B are a plan view and a front view of the adjusting member shown in FIG. 2.
FIGS. 9A and 9B are sectional views taken along lines C-C and D-D of FIG. 8, respectively.
FIGS. 10A, 10B, and 10C are views showing a state in which the connecting cord and a second cord are connected to the adjusting member of FIG. 2.
FIGS. 11A and 11B are sectional views illustrating operational states of the connecting cord relative to the adjusting member of FIG. 2.
FIGS. 12 and 13 are views showing a usage state of the cord fastening and adjusting device according to an embodiment of the present invention.

### DETAILED DESCRIPTION OF THE INVENTION

Hereinafter, embodiments of the present invention will be described in detail with reference to the accompanying drawings. In this process, the thickness of lines or the size of elements shown in the drawings may be exaggerated for clarity and convenience of explanation.

In addition, the terms described below are defined in consideration of the functions of the present invention and may vary depending on the intention or custom of the user or operator. Therefore, the definitions of such terms should be interpreted based on the entire content of this specification. As described above, the term "belt," "strap," or "cord" refers to elements attached to a hiking backpack, bag, or clothing. In the case of a hiking backpack, such cords may be applied for various purposes such as shoulder cords, chest cords, or waist cords. Accordingly, the term "cord" herein is intended to encompass all types of straps or cords used for decoration, connection, or separation, and the following description will consistently use the term "cord."

The embodiments described below may be implemented in various modified forms. For clarity of explanation of the characteristics of the embodiments, detailed descriptions of well-known elements or operations known to those skilled in the art are omitted.

Throughout this specification, when one component is described as being "connected" to another component, it includes not only cases where the components are "directly connected" but also cases where another component is interposed between them.

Also, when one component is described as "including" another component, unless specifically stated otherwise, it means that the component may further include other components in addition to those explicitly mentioned, rather than excluding them.

In this specification, expressions such as "front end" or "front side" are defined based on the direction in which the fixing member or adjusting member is inserted into a cord, and the opposite direction is defined as the rear side.

FIG. 2 is a perspective view illustrating a connection state between a fixing member and an adjusting member of a cord fastening and adjusting device according to an embodiment of the present invention. As shown in FIG. 2, the cord fastening and adjusting device according to the embodiment of the present invention includes a fixing member 100 and an adjusting member 200, which are connected by a connecting cord 300. The fixing member 100 and the adjusting member 200 are respectively fastened to first and second cords S1 and S2 attached to different objects.

The fixing member 100 will now be described in detail.

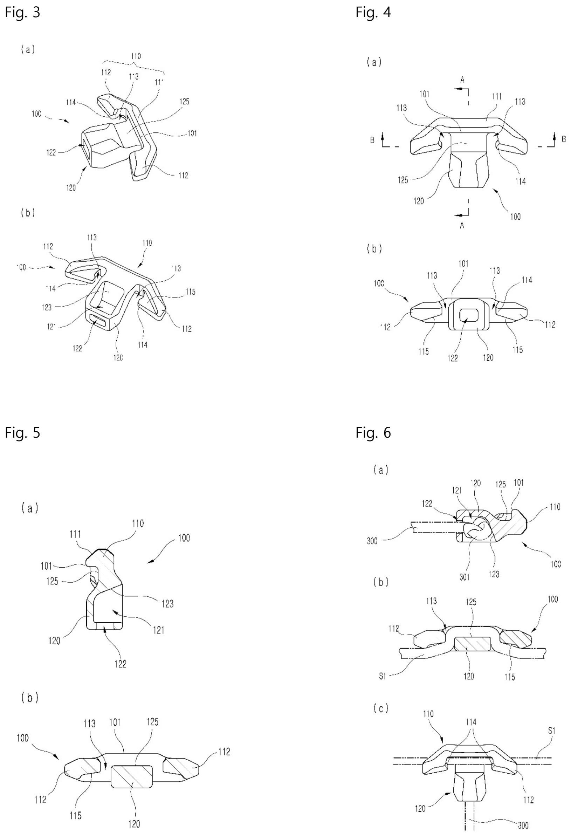

FIGS. 3A and 3B are perspective views of the fixing member 100, FIGS. 4A and 4B are a plan view and a front view of the fixing member 100, and FIGS. 5A and 5B are sectional views taken along lines A-A and B-B of FIG. 4, respectively. Referring to these drawings, the fixing member 100 includes a first base 101, a first hook portion 110, and a first connecting portion 120.

The first hook portion 110 and the first connecting portion 120 are arranged around the first base 101. The first hook portion 110 is a part that engages with the first cord S1 of the object at the front of the first base 101, while the first connecting portion 120 is configured to be connected to a connecting cord 300.

The first hook portion 110 includes a first entrance portion 111, a pair of first wing portions 112, and a pair of first hook grooves 113. The first entrance portion 111 extends forward from the first base 101 while gradually narrowing, and the first wing portions 112 extend laterally from both sides of the first base 101, with their distal ends bent rearwardly.

The front ends of the first wing portions 112 may be continuously formed as the first entrance portion 111 that narrows toward the front.

Inner surfaces of the first wing portions 112 are spaced apart from both side surfaces of the first connecting portion 120, thereby forming the first hook grooves 113 between them. In other words, the first hook grooves 113 are defined between the first base 101, the first wing portions 112, and the first connecting portion 120.

The first hook grooves 113 are grooves into which the first cord S1 is inserted, and their cross-sections may be circular or of any other desired shape. It is preferable that each corner of the grooves is formed as a curved surface.

The inner ends of the first wing portions 112 are bent inwardly so as to surround the first hook grooves 113, thereby forming first hook parts 114 having curved surfaces that narrow the entrances of the first hook grooves 113, thereby preventing the first cord S1 from disengaging easily from the first hook grooves 113.

It is preferable that each rear surface of the first wing portions 112 be formed to incline toward the first hook grooves 113, and that both side surfaces of the first connecting portion 120 be formed to incline forward while gradually narrowing. This structure guides the first cord S1 entering between the first connecting portion 120 and the first wing portions 112 so that it is smoothly inserted into the first hook grooves 113.

As shown in FIG. 4B, both lower surfaces of the first wing portions 112 are formed as first inclined surfaces 115 slanting upwardly toward the inside.

The first inclined surfaces 115 function as passages through which the first cord S1 can be smoothly inserted into the first hook grooves 113, and in addition, the thickness of the wing portions in the region of the first inclined surfaces 115 may be formed thinner.

The first connecting portion 120 extends rearward from the first base 101, and a knot receiving portion 121 is formed inside it. One surface, preferably the lower surface, of the knot receiving portion 121 is open, and a through-hole 122 is formed at the rear side.

The knot receiving portion 121 is configured such that when the connecting cord 300 passes through the through-hole 122, a knot 301 thicker than the through-hole 122 is formed at one end of the connecting cord 300, thereby fixing the connecting cord 300 inside the knot receiving portion 121.

An inner wall of the knot receiving portion 121 may be formed as an inclined guide surface 123 so that the connecting cord 300 inserted through the through-hole 122 can be easily pulled out toward the opening.

On the upper surface of the fixing member 100, a first seating groove 125 is formed as a stepped recess between the first base 101 and the first connecting portion 120. The first seating groove 125 guides the first cord S1 so that it can be stably seated between the first hook grooves 113 on both sides.

FIGS. 6A and 6B show states in which the connecting cord 300 and the first cord S1 are connected to the cross-sections shown in FIG. 5, where FIG. 6A illustrates a state in which one end of the connecting cord 300, which is to be connected to the adjusting member 200, is fastened to the fixing member 100, and FIG. 6B illustrates a state in which the first cord S1 is connected to the first hook grooves 113 and the first seating groove 125. FIG. 6C is a plan view showing a state in which the connecting cord 300 and the first cord S1 are connected to the fixing member 100.

Referring to FIG. 6A, when one end of the connecting cord 300 connecting the fixing member 100 and the adjusting member 200 is inserted through the through-hole 122 and the knot 301 is formed at the end of the connecting cord 300, pulling the connecting cord 300 outward again causes the knot 301 to be seated inside the knot receiving portion 121. Since the knot 301 is larger than the through-hole 122, it does not pass through the through-hole 122 and is thereby fixed in place.

To release the connecting cord 300 in this state, the connecting cord 300 may be pushed from the outer side of the through-hole 122 so that the knot 301 is pulled out through the opening of the knot receiving portion 121. Once the knot 301 is untied, the connecting cord 300 can be completely drawn out from the knot receiving portion 121.

Before tying the knot, when the connecting cord 300 is pushed through the through-hole 122, or even when the knot is tied, if the connecting cord 300 is pushed from the outer side of the through-hole 122, the end of the connecting cord 300 is guided along the inclined guide surface 123, allowing it to be smoothly pushed out.

Referring to FIGS. 6B and 6C, when the fixing member 100 is hooked onto the first cord S1 provided on a backpack or clothing, the first cord S1 passes sequentially under the first wing portions 112 through the first hook grooves 113 and the first seating groove 125.

The first cord S1 is guided by the first inclined surfaces 115 formed on the undersides of the first wing portions 112, thereby naturally entering the first hook grooves 113. It is prevented from disengaging easily by the first hook parts 114 and maintains a stable position within the first seating groove 125.

Next, the adjusting member 200 will be described in detail.

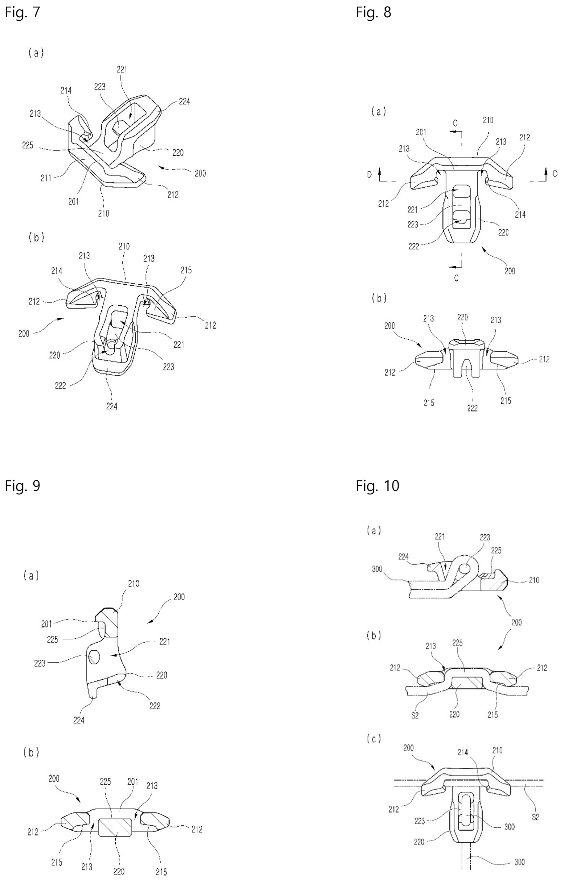

FIGS. 7A and 7B are perspective views of the adjusting member 200, FIGS. 8A and 8B are a plan view and a front view of the adjusting member 200, and FIGS. 9A and 9B are sectional views taken along lines C-C and D-D of FIG. 8, respectively. Referring to these drawings, the adjusting member 200 includes a second base 201, a second hook portion 210, and a second connecting portion 220.

The second hook portion 210 extends forward from the second base 201 and is configured to be engaged with the second cord S2, while the second connecting portion 220 extends rearward from the second base 201 and is configured to be connected to a connecting cord 300 that is to be connected to the fixing member 100.

The second hook portion 210 includes a second entrance portion 211, a pair of second wing portions 212, and a pair of second hook grooves 213. The second entrance portion 211 extends forward from the second base 201 while gradually narrowing, and the second wing portions 212 extend laterally from both sides of the second base 201, with their distal ends bent rearwardly.

The front ends of the second wing portions 212 may be continuously formed as the second entrance portion 211 that narrows toward the front.

Inner surfaces of the second wing portions 212 are spaced apart from both side surfaces of the second connecting portion 220, thereby forming the second hook grooves 213 between them. In other words, the second hook grooves 213 are defined between the second base 201, the second wing portions 212, and the second connecting portion 220.

The second hook grooves 213 are grooves into which the second cord S2 is inserted, and their cross-sections may be circular or of any other desired shape. It is preferable that each corner of the grooves is formed as a curved surface.

The inner ends of the second wing portions 212 are bent inwardly so as to surround the second hook grooves 213, thereby forming second hook parts 214 having curved surfaces that narrow the entrances of the second hook grooves 213. This configuration prevents the second cord S2 from disengaging easily from the second hook grooves 213.

It is preferable that each rear surface of the second wing portions 212 be formed to incline toward the second hook grooves 213, and that both side surfaces of the second connecting portion 220 be formed to incline forward while gradually narrowing. This structure guides the second cord S2 entering between the second connecting portion 220 and the second wing portions 212 so that it is smoothly inserted into the second hook grooves 213.

As shown in FIG. 8B, both lower surfaces of the second wing portions 212 are formed as second inclined surfaces 215 slanting upwardly toward the inside.

The second inclined surfaces 215 function as passages that allow the second cord S2 to be smoothly inserted into the second hook grooves 213. In addition, the thickness of the wing portions may be made thinner only in the region of the second inclined surfaces 215.

The second connecting portion 220 extends rearward from the second base 201, and a passage 221 that is open at both its upper and lower sides is formed inside. A pressing groove 222 in communication with the passage 221 is formed in the lower portion of the rear surface.

Within the passage 221, a hooking bar 223 for engaging the connecting cord 300 is formed laterally across the passage 221.

On the upper surface of the adjusting member 200, a second seating groove 225 is formed as a stepped recess between the second base 201 and the second connecting portion 220. The second seating groove 225 guides the second cord S2 so that it can be stably seated between the second hook grooves 213 on both sides.

FIGS. 10A and 10B show states in which the connecting cord 300 and the second cord S2 are connected to the cross-sections shown in FIG. 9, where FIG. 10A illustrates a state in which the other end of the connecting cord 300, one end of which has been fixed to the fixing member 100, is connected to the second connecting portion 220 of the adjusting member 200, and FIG. 10B illustrates a state in which the second cord S2 is connected to the second hook grooves 213 and the second seating groove 225. FIG. 10C is a plan view showing a state in which the connecting cord 300 and the second cord S2 are connected to the adjusting member 200.

Unlike the fixing member 100, the adjusting member 200 does not fix the connecting cord 300 by means of a knot. Instead, the connecting cord 300 can be pulled or released as needed to adjust its tension. Accordingly, one end of the connecting cord 300 is fixed to the fixing member 100 as a fixed end, and the other end of the connecting cord 300 is a free end connected to the adjusting member 200.

Referring to FIG. 10A, the connecting cord 300 is inserted upward into the lower side of the passage 221, passes around the hooking bar 223, and is drawn out downward again. At this time, the connecting cord 300 passes through the pressing groove 222 and can be fixed or released depending on its contact state with the pressing groove 222.

When the second hook portion 210 is engaged with the second cord S2 and the connecting cord 300 connected to the fixing member 100 is pulled, the connecting cord 300 must maintain a fixed state along the passage 221. When manual manipulation is applied, the connecting cord 300 is released from the fixed state and can be adjusted by pulling or loosening it.

To achieve this, as shown in the sectional view, the hooking bar 223 is disposed above the second base 201 to which the second cord S2 is connected, and the pressing groove 222, where the connecting cord 300 passes around the hooking bar 223, is located below the hooking bar 223.

The pressing groove 222 is narrower than the passage 221 and has a width sufficient to press the connecting cord 300. In addition, as shown in the drawings, it may be configured as a V-shaped groove narrowing downward.

Referring to FIGS. 10B and 10C, when the adjusting member 200 is hooked onto the second cord S2 provided on a backpack or clothing, the second cord S2 passes sequentially under the second wing portions 212 through the second hook grooves 213 and the second seating groove 225.

The second cord S2 is guided by the second inclined surfaces 215 formed on the undersides of the second wing portions 212, thereby naturally entering the second hook grooves 213. It is prevented from disengaging easily by the second hook parts 214 and maintains a stable position within the second seating groove 225.

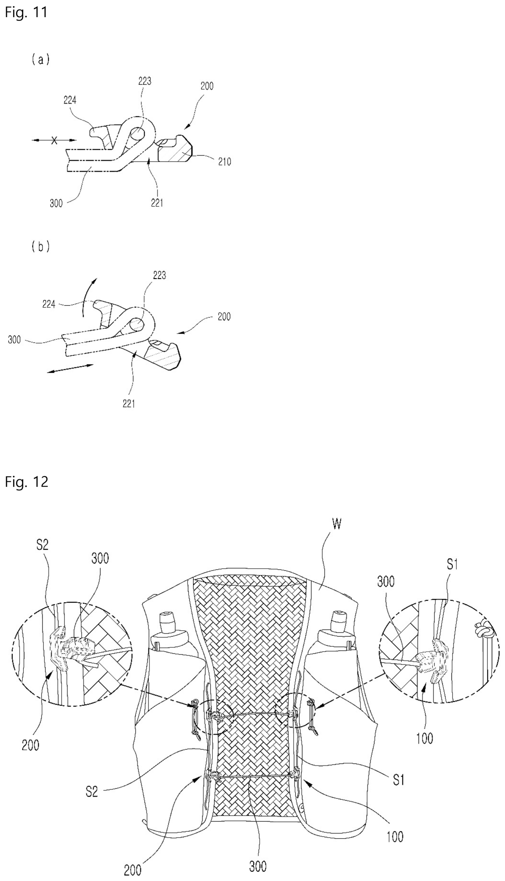

FIG. 11 illustrates the operational relationship between the adjusting member 200 and the connecting cord 300.

Referring to FIG. 11A, the connecting cord 300 is shown in a taut and fixed state. The connecting cord 300 passes around the hooking bar 223 and is inserted into the pressing groove 222. As the connecting cord 300 is pulled, it is bent and simultaneously pressed within the pressing groove 222, so that the tensioned state is maintained without the need for any additional fixing means.

In this fixed state, when the rear end of the adjusting member 200 is lifted, as shown in FIG. 11B, the bent state of the connecting cord 300 becomes loosened, and the pressing force within the pressing groove 222 is released, allowing the connecting cord 300 to be pulled or loosened.

In this manner, by a simple operation of pulling the connecting cord 300 relative to the adjusting member 200, the fixing member 100 and the adjusting member 200 are fixed to each other, and by lifting the rear end of the adjusting member 200, the fixed state of the connecting cord 300 can be released so that the tension of the connecting cord 300 can be easily adjusted.

To facilitate lifting of the rear end of the adjusting member 200, a protrusion 224 formed to extend rearward beyond the rear surface may be provided on the upper surface of the second connecting portion 220. Accordingly, the user can easily lift the protrusion 224 with a finger to adjust the connecting cord 300.

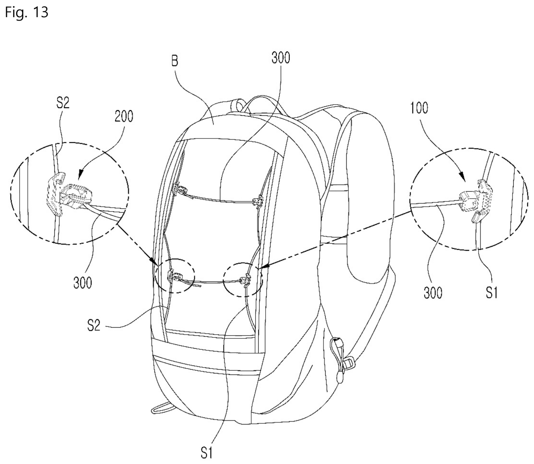

FIGS. 12 and 13 illustrate examples of use of the cord fastening and adjusting device according to an embodiment of the present invention. FIG. 12 shows an example in which the device is applied to cords S1 and S2 provided on a vest W, and FIG. 13 shows an example in which the device is applied to cords S1 and S2 provided on a backpack B.

As shown in FIGS. 12 and 13, the cord fastening and adjusting device according to an embodiment of the present invention can be used to connect two cords S1 and S2, maintaining a desired spacing and tension or achieving fastening between them.

Basically, the fixing member 100 and the adjusting member 200 are connected by the connecting cord 300. One end of the connecting cord 300 serves as a fixed end, where a knot 301 is formed and seated within the knot receiving portion 121 of the fixing member 100, while the other end of the connecting cord 300 serves as a free end that passes through the passage 221 of the adjusting member 200.

In this state, the first hook portion 110 of the fixing member 100 and the second hook portion 210 of the adjusting member 200 are respectively hooked and connected to the first and second cords S1 and S2. When the first and second hook portions 110 and 210 are inserted between the surface of the object, such as the vest W or the backpack B, and the first and second cords S1 and S2 to be engaged therewith, the first entrance portion 111 and the second entrance portion 211, which narrow toward the front, allow easy insertion.

After insertion, the first and second wing portions 112 and 212 are respectively hooked onto the first and second cords S1 and S2. At this time, the rear surfaces of the respective wing portions 112 and 212 are inclined toward the first and second hook grooves 113 and 213, and both side surfaces of the first and second connecting portions 120 and 220 are also inclined inward, thereby allowing the first and second cords S1 and S2 to be easily inserted into the first and second hook grooves 113 and 213, respectively.

The first and second cords S1 and S2 are seated within the respective seating grooves 125 and 225 on the upper surfaces of the fixing member 100 and the adjusting member 200, and are inserted in a bent state such that they are pressed beneath the respective wing portions 112 and 212, thereby maintaining the coupled state.

Furthermore, the first and second cords S1 and S2 inserted into the respective hook grooves 113 and 213 are supported by the corresponding hook parts 114 and 214 while being seated in the respective seating grooves 125 and 225, thus preventing them from disengaging easily.

The connected fixing member 100 and adjusting member 200 can also be moved along the longitudinal directions of the respective first and second cords S1 and S2.

In the connected state, the tension of the two cords S1 and S2 can be adjusted by pulling or loosening the connecting cord 300 using the adjusting member 200. By lifting the protrusion 224 of the adjusting member 200, the connecting cord 300 passing through the passage 221 of the adjusting member 200 is loosened, and by pulling the free end of the connecting cord 300 and then releasing it, the connecting cord 300 is inserted into the pressing groove 222, where it is fixed in the adjusted state by the angle of engagement between the hooking bar 223 and the pressing groove 222, as well as by the frictional force of the pressing groove 222.

As described above, the use of the fixing member 100 and the adjusting member 200 according to an embodiment of the present invention allows the cords attached to various objects to achieve not only an aesthetically pleasing appearance but also simple and convenient operation.

The above-described embodiments are provided for illustrative purposes only, and it will be understood by those skilled in the art that various modifications can be made without departing from the spirit or essential features of the present invention. Therefore, the embodiments described above should be understood as exemplary rather than limiting in all respects.

## Claims

1. A cord fastening and adjusting device comprising:
a fixing member including a first base, a first hook portion extending forward from the first base and configured to be engaged with a first cord of an object, and a first connecting portion including a knot receiving portion extending rearward from the first base, in which one end of a connecting cord is fixed; and
an adjusting member including a second base, a second hook portion extending forward from the second base and configured to be engaged with a second cord of the object, and a second connecting portion through which the connecting cord passes and which selectively fixes or releases the connecting cord.

2. The cord fastening and adjusting device of claim 1, wherein the knot receiving portion has one open surface and a through-hole formed at a rear side thereof, such that a knot formed at the fixed end of the connecting cord is seated therein.

3. The cord fastening and adjusting device of claim 1, wherein the first hook portion includes a first entrance portion narrowing toward the front of the first base, a pair of first wing portions extending laterally from the first base, and a pair of first hook grooves formed between the first base and the first wing portions, the first cord being engaged therein, and
the second hook portion includes a second entrance portion narrowing toward the front of the second base, a pair of second wing portions extending laterally from the second base, and a pair of second hook grooves formed between the second base and the second wing portions, the second cord being engaged therein.

4. The cord fastening and adjusting device of claim 3, wherein undersurfaces of the first and second wing portions include inclined surfaces slanting upwardly toward the inside.

5. The cord fastening and adjusting device of claim 3, wherein entrances of the first hook grooves are narrowed by first hook parts bent inwardly so as to prevent disengagement of the first cord, and
entrances of the second hook grooves are narrowed by second hook parts bent inwardly so as to prevent disengagement of the second cord.

6. The cord fastening and adjusting device of claim 5, wherein the first wing portions extend rearward, and the first hook part is formed by bending inward the inner ends of the first wing portions that extend rearward, and
the second wing portions extend rearward, and the second hook part is formed by bending inward the inner ends of the second wing portions that extend rearward.

7. The cord fastening and adjusting device of claim 1, wherein the second connecting portion includes a passage through which the connecting cord is inserted, a pressing groove in communication with the passage and configured to press the connecting cord, and a hooking bar extending across the passage, and
the connecting cord is fixed or released through cooperation between the hooking bar and the pressing groove.

8. The cord fastening and adjusting device of claim 7, wherein the hooking bar is disposed above the second base to which the second cord is connected, and the pressing groove is disposed below the hooking bar.

9. The cord fastening and adjusting device of claim 7, wherein the pressing groove is narrower than the passage.

10. The cord fastening and adjusting device of claim 7, wherein the pressing groove has a V-shaped configuration that narrows downward.

11. The cord fastening and adjusting device of claim 1, wherein a protrusion is formed at an outer rear end of the second connecting portion to release a fixed state of the connecting cord.

12. The cord fastening and adjusting device of claim 1, wherein the fixing member further includes a first seating groove on an upper surface thereof so that the first cord is stably seated therein, and
the adjusting member further includes a second seating groove on an upper surface thereof so that the second cord is stably seated therein.

13. The cord fastening and adjusting device of claim 1, wherein the connecting cord has a knot formed at the fixed end and seated within the knot receiving portion, and a free end configured to permit adjustment of the tension thereof through the second connecting portion.
